# EUROPÄISCHE PATENTSCHRIFT

(11) **EP 2 478 244 B1**
(45) Veröffentlichungstag und Bekanntmachung des Hinweises auf die Patenterteilung: **30.07.2014**
(21) Anmeldenummer: 10755106.1
(22) Anmeldetag: 13.09.2010
(51) Int. Cl.: F16D 23/06

(54) **SCHALTMUFFE FÜR EIN SCHALTGETRIEBE**
SELECTOR SLEEVE FOR A MANUAL TRANSMISSION
MANCHON D'ACTIONNEMENT POUR BOÎTE DE VITESSES MÉCANIQUE

(30) Priorität: 14.09.2009 DE 102009041518
(43) Veröffentlichungstag der Anmeldung: 25.07.2012
(73) Patentinhaber: Hoerbiger Antriebstechnik Holding GmbH, 86956 Schongau (DE)
(72) Erfinder: BACK, Ottmar, 82362 Weilheim (DE)
(74) Vertreter: Prinz & Partner
(86) Internationale Anmeldenummer: PCT/EP2010/005605
(87) Internationale Veröffentlichungsnummer: WO 2011/029623

(56) Entgegenhaltungen:
- EP-A1- 1 447 581
- EP-A1- 1 790 869
- EP-A1- 1 985 878
- EP-A1- 2 182 233
- EP-A2- 1 101 966
- DE-A1- 10 018 094
- DE-A1-102005 060 572
- FR-A1- 2 770 599

## Beschreibung

Die Erfindung betrifft eine Schaltmuffe für ein Schaltgetriebe, mit einem ringförmigen Basiskörper und einer Verzahnung, die auf einer korrespondierenden Verzahnung eines Synchronkörpers verschiebbar angeordnet werden kann, wobei die Verzahnung am Innenrand des Basiskörpers ausgebildet ist, sowie ein Verfahren zur Herstellung einer solchen Schaltmuffe.

Die Schaltmuffe bei einem Schaltgetriebe dient dazu, die drehfeste Verbindung zwischen einer Getriebewelle und einem als Losrad auf der Getriebewelle angeordneten Gangrad bei Bedarf herzustellen. Zu diesem Zweck ist die Schaltmuffe meist in axialer Richtung verschiebbar auf einem Synchronkörper so angeordnet, dass sie aus einer Ausgangsstellung in eine durchgeschaltete Stellung verschoben werden kann. In der durchgeschalteten Stellung greift die Schaltmuffe sowohl am Synchronkörper als auch einer zugeordneten Verzahnung am Gangrad an, sodass die drehfeste Verbindung hergestellt ist. Die Betätigung der Schaltmuffe erfolgt durch eine Schaltgabel, die eine Betätigung beispielsweise eines Handschalthebels in eine Verschiebung der Schaltmuffe umsetzt.

Heute üblich sind Schaltmuffen, die entweder pulvermetallurgisch oder als Frästeile hergestellt sind. Beide Herstellungsverfahren sind relativ aufwendig.

Die französische Offenlegungsschrift FR 2 770 599 A1 zeigt eine Schaltmuffe für ein Schaltgetriebe mit einem zylindrischen Basiskörper und einer Verzahnung, die am Innenrand des Basiskörpers ausgebildet ist. Der zylindrische Basiskörper weist an seinem Außenumfang eine für die Führungsgabel vorgesehene Nut auf.

Aus der DE 100 18 094 A1 ist bereits eine Schaltmuffe der eingangs genannten Art bekannt, die aus zwei Metallringen besteht, an denen eine Verzahnung angebracht ist, die aus einem Blechstreifen gebogen ist. Auch bei dieser Schaltmuffe ergibt sich ein erheblicher Aufwand bei der Fertigung, insbesondere für die Verzahnung, wenn diese mit der nötigen Präzision gefertigt werden soll.

Die Aufgabe der Erfindung besteht darin, eine Schaltmuffe für ein Schaltgetriebe zu schaffen, die sich durch einen einfachen Aufbau auszeichnet und mit geringem Aufwand hergestellt werden kann.

Zur Lösung dieser Aufgabe ist erfindungsgemäß bei einer Schaltmuffe der eingangs genannten Art vorgesehen, dass der Basiskörper scheibenförmig ist. Die Erfindung beruht auf der Erkenntnis, dass ein voluminöser Synchronring nicht erforderlich ist. Stattdessen ist es ausreichend, einen einzigen ringförmigen Basiskörper zu verwenden, wobei unter "ringförmig" hier ein Körper zu verstehen ist, dessen Dicke sehr viel kleiner als sein Durchmesser ist. Unmittelbar an diesem Basiskörper kann die Verzahnung ausgebildet werden; es ist kein separates Bauteil nötig, das die Verzahnung bildet.

Vorzugsweise ist vorgesehen, dass die Verzahnung an mindestens einem Segment ausgebildet ist, das vom Basiskörper nach außen abgebogen ist. Dies ermöglicht, eine Verzahnung zu schaffen, die sich in axialer Richtung über eine Länge erstreckt, die größer als die Dicke des Basiskörpers ist. Dadurch wird der Eingriff der Verzahnung mit der Verzahnung des Synchronkörpers bzw. des Gangrades verbessert.

Vorzugsweise sind mehrere Segmente vorgesehen, die sich auf der einen und der anderen Seite des Basiskörpers erstrecken. Auf diese Weise ergibt sich eine noch größere axiale Länge der Verzahnung.

Gemäß einer bevorzugten Ausführungsform der Erfindung sind sechs Segmente vorgesehen, die abwechselnd auf der einen und der anderen Seite des Basiskörpers angeordnet sind. Diese Anzahl von Segmenten führt zu einem guten Kompromiss zwischen Herstellungsaufwand einerseits und Herstellbarkeit andererseits.

Vorzugsweise ist im Basiskörper mindestens eine Ausnehmung für einen Sperrmechanismus vorgesehen, der ein Durchschalten der Schaltmuffe verhindert, solange die Synchronisierung nicht abgeschlossen ist. Am Rand der Ausnehmung kann beispielsweise eine schräg angestellte Sperrfläche angeordnet sein, die eine Verdrehung eines Synchronrings solange verhindert, wie dieser ein Reibmoment zum Angleichen der Drehzahl des Gangrades an die Drehzahl der Getriebewelle übertragen muss.

Vorzugsweise ist vorgesehen, dass der Basiskörper aus Blech besteht. Dies ermöglicht, den Basiskörper in besonders kostengünstiger und effizienter Weise durch Stanzen und Biegen in einem einzigen Bauteil herzustellen. Insbesondere sind keine Montage- oder Fügeschritte nötig.

Erfindungsgemäß ist auch ein Verfahren zur Herstellung einer Schaltmuffe für ein Schaltgetriebe vorgesehen, das die folgenden Schritte enthält: Zunächst wird ein Basiskörper für die Schaltmuffe aus Metall bereitgestellt. Dann wird eine Verzahnung ausgebildet, die eine Öffnung im Basiskörper konzentrisch umgibt. Der Basiskörper ist scheibenförmig ausgeführt. Mit diesem Verfahren kann eine Schaltmuffe mit besonders geringem Aufwand hergestellt werden.

Vorzugsweise ist vorgesehen, dass zunächst ein ringförmiger Rohling bereitgestellt wird, dass die Verzahnung am ebenen Rohling an mindestens einem Abschnitt ausgebildet wird und dass anschließend dieser aus der Ebene des Rohlings abgebogen wird, so dass ein Segment am Basiskörper erhalten wird. Bei dieser Vorgehensweise ist der Aufwand für das Ausbilden der Verzahnung besonders gering, da sie an einem ebenen Abschnitt vorgesehen ist.

Gemäß einer Alternative ist vorgesehen, dass zunächst ein ringförmiger Rohling bereitgestellt wird, dass aus der Ebene des Rohlings mindestens ein Segment abgebogen wird und anschließend die Verzahnung in das Segment eingeprägt wird. Bei dieser Ausgestaltung lässt sich eine besonders hohe Qualität der Verzahnung erreichen, da das Segment nicht weiter umgeformt werden muss, nachdem die Verzahnung hergestellt ist.

Gemäß einer weiteren Alternative ist vorgesehen, dass zunächst ein ringförmiger Rohling bereitgestellt wird, dass aus der Ebene des Rohlings mindestens ein ebener Segment-Rohling abgebogen wird, dass dann die Verzahnung in den Segment-Rohling eingeprägt wird und dass danach der Segment-Rohling in ein gekrümmtes Segment fertiggebogen wird. Diese Vorgehensweise stellt sich als guter Kompromiss zwischen den beiden vorgenannten Verfahren dar.

Vorzugsweise wird die Verzahnung kalibriert. Auf diese Weise lässt sich die gewünschte Präzision herstellen.

Vorzugsweise ist vorgesehen, dass der Basiskörper aus einer Metallplatte ausgestanzt wird. Dies führt zu sehr geringen Herstellungskosten im Vergleich zu einem pulvermetallurgisch oder durch Fräsen hergestellten Körper.

Vorzugsweise ist vorgesehen, dass der Basiskörper mindestens abschnittsweise einer Wärmebehandlung unterzogen wird. Auf diese Weise kann die nötige Härte des Basiskörpers gewährleistet werden.

Je nach den Anforderungen kann der Basiskörper abschnittsweise spanend oder auch spanlos, beispielsweise durch Prägen, Pressen oder Umformen, nachbearbeitet werden.

Die Erfindung wird nachfolgend anhand einer Ausführungsform beschrieben, die in den beigefügten Zeichnungen dargestellt ist. In diesen zeigen:
- Figur 1 eine perspektivische Ansicht einer erfindungsgemäßen Schaltmuffe; und
- Figur 2 eine Draufsicht auf die Schaltmuffe von Figur 1.

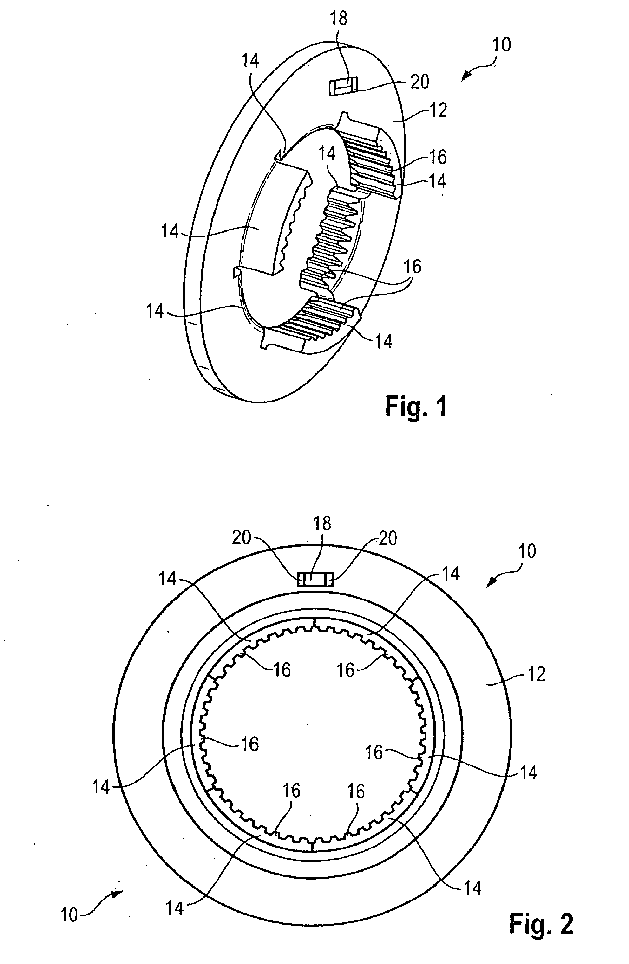

In den Figuren 1 und 2 ist eine Schaltmuffe 10 gezeigt, die einen ringförmigen Basiskörper 12 und insgesamt sechs Segmente 14 aufweist. Der Basiskörper 12 besteht aus Metall und ist aus einem Metallblech ausgestanzt, und die Segmente 14 sind einstückig am Innenrand des ringförmigen Basiskörpers 12 ausgebildet. Dabei sind die Segmente abwechselnd in entgegengesetzten Richtungen aus der Ebene des Basiskörpers 12 abgebogen. Anders ausgedrückt: ein Segment erstreckt sich über einen Winkelbereich von etwa 60° auf der einen Seite des Basiskörpers, und das in Umfangsrichtung benachbarte Segment erstreckt sich ebenfalls über einen Winkelbereich von etwa 60°, jedoch auf der entgegengesetzten Seite des Basiskörpers 12, und so weiter.

Auf der Innenseite jedes Segments 14 ist eine Verzahnung 16 ausgebildet, die in Umfangsrichtung drehfest, jedoch axial verschiebbar auf einer komplementären Verzahnung eines Synchronkörpers angeordnet werden kann. Wie in Figur 2 zu sehen ist, ergänzen sich die Verzahnungen 16, obwohl sie auf jeder Seite des Basiskörpers 12 nur abschnittsweise angeordnet sind, zu einer in Umfangsrichtung durchgehenden Gesamtverzahnung.

Zur axialen Verstellung der Schaltmuffe 12 wird eine Schaltgabel verwendet, die den Basiskörper 12 im Bereich des Außenumfangs umgreift und diesen in axialer Richtung verstellen kann.

Im ringförmigen Basiskörper 12 können weitere Gestaltungen vorgesehen sein, die für die Funktion der Schaltmuffe nötig sind. Als ein Beispiel ist hier eine Ausnehmung 18 gezeigt, die an ihren in Umfangsrichtung voneinander abgewandten Enden mit jeweils einer Sperrfläche 20 versehen ist, die schräg ausgerichtet ist. Die Sperrflächen 20 können dazu dienen, mit geeigneten Sperrflächen eines Reib- oder Synchronrings zusammenzuwirken, um ein Durchschalten der Schaltmuffe zu verhindern, solange der Reib- oder Synchronring ein Reibmoment zur Angleichung der Drehzahl des Gangrades an die Drehzahl des Synchronkörpers übertragen muss. Zusätzlich können weitere, hier nicht dargestellte Gestaltungen vorgesehen sein, die beispielsweise zur Verrastung der Schaltmuffe in einer Neutralstellung dienen.

Die gezeigte Schaltmuffe wird hergestellt, indem zunächst eine Blechronde bzw. ein ringförmiger Rohling aus Metallblech ausgestanzt wird. Dieser Rohling enthält an seinem Innenrand die Abschnitte, die später zu den Segmenten abgebogen werden. Die Verzahnung 16 kann entweder hergestellt werden, solange die Abschnitte sich noch in der Ebene des Rohlings befinden, nachdem die Abschnitte bereits zu zylinderabschnittsförmigen Segmenten umgebogen wurden oder nachdem die Abschnitte in ebene Segment-Rohlinge abgebogen wurden. Die Verzahnung wird dabei vorzugsweise durch Einprägen hergestellt, und die Segmente werden zusammen mit der an ihnen angebrachten Verzahnung abschließend kalibriert.

Alternativ kann die Verzahnung durch Anspritzung oder Hinterlegung der Zähne geprägt und/oder zerspant herstellt werden.

Zusätzliche Merkmale können durch spanende oder spanlose Bearbeitung angebracht werden. Soweit nötig, kann eine Wärmebehandlung oder andere Art der Härtung vorgenommen werden, um die nötige Materialhärte zu erzielen.

## Patentansprüche

1. Schaltmuffe (10) für ein Schaltgetriebe, mit einem ringförmigen Basiskörper (12) und einer Verzahnung (16), die auf einer korrespondierenden Verzahnung eines Synchronkörpers verschiebbar angeordnet werden kann, wobei die Verzahnung am Innenrand des Basiskörpers (12) ausgebildet ist, **dadurch gekennzeichnet, dass** der ringförmige Basiskörper (12) scheibenförmig ist.

2. Schaltmuffe nach Anspruch 1, **dadurch gekennzeichnet, dass** die Verzahnung an mindestens einem Segment (14) ausgebildet ist, das vom Basiskörper (12) nach außen abgebogen ist.

3. Schaltmuffe nach Anspruch 2, **dadurch gekennzeichnet, dass** mehrere Segmente (14) vorgesehen sind, die sich auf der einen und der anderen Seite des Basiskörpers (12) erstrecken.

4. Schaltmuffe nach Anspruch 3, **dadurch gekennzeichnet, dass** sechs Segmente (14) vorgesehen sind, die abwechselnd auf der einen und der anderen Seite des Basiskörpers (12) angeordnet sind.

5. Schaltmuffe nach einem der vorhergehenden Ansprüche, **dadurch gekennzeichnet, dass** weitere Ausgestaltungen vorgesehen sind, die für die Verwirklichung eines Sperrmechanismus dienen.

6. Schaltmuffe nach Anspruch 5, **dadurch gekennzeichnet, dass** im Basiskörper (12) mindestens eine Ausnehmung (18) für einen Sperrmechanismus vorgesehen ist, der ein Durchschalten der Schaltmuffe verhindert, solange die Synchronisierung nicht abgeschlossen ist.

7. Schaltmuffe nach einem der vorhergehenden Ansprüche, **dadurch gekennzeichnet, dass** der Basiskörper (12) aus Blech besteht.

8. Verfahren zur Herstellung einer Schaltmuffe (10) für ein Schaltgetriebe mit den folgenden Schritten:
- es wird ein Basiskörper (12) für die Schaltmuffe (10) aus Metall bereitgestellt;
- es wird eine Verzahnung (16) ausgebildet, die eine Öffnung im Basiskörper (12) konzentrisch umgibt,
**dadurch gekennzeichnet, dass** der Basiskörper (12) scheibenförmig ist.

9. Verfahren nach Anspruch 8, **dadurch gekennzeichnet, dass** zunächst ein ringförmiger Rohling bereitgestellt wird, dass die Verzahnung (16) am ebenen Rohling an mindestens einem Abschnitt ausgebildet wird und dass anschließend dieser aus der Ebene des Rohlings abgebogen wird, so dass ein Segment (14) am Basiskörper (12) erhalten wird.

10. Verfahren nach Anspruch 8, **dadurch gekennzeichnet, dass** zunächst ein ringförmiger Rohling bereitgestellt wird, dass aus der Ebene des Rohlings mindestens ein Segment (14) abgebogen wird und anschließend die Verzahnung in das Segment (14) eingeprägt wird.

11. Verfahren nach Anspruch 8, **dadurch gekennzeichnet, dass** zunächst ein ringförmiger Rohling bereitgestellt wird, dass aus der Ebene des Rohlings mindestens ein ebener Segment-Rohling abgebogen wird, dass dann die Verzahnung (16) in den Segment-Rohling eingeprägt wird und dass danach der Segment-Rohling in ein gekrümmtes Segment (14) fertiggebogen wird.

12. Verfahren nach einem der Ansprüche 8 bis 11, **dadurch gekennzeichnet, dass** die Verzahnung (16) kalibriert wird.

13. Verfahren nach einem der Ansprüche 8 bis 12, **dadurch gekennzeichnet, dass** der Basiskörper (12) aus einer Metallplatte ausgestanzt wird.

14. Verfahren nach einem der Ansprüche 8 bis 13, **dadurch gekennzeichnet, dass** der Basiskörper (12) mindestens abschnittsweise einer Wärmebehandlung unterzogen wird.

15. Verfahren nach einem der Ansprüche 8 bis 14, **dadurch gekennzeichnet, dass** der Basiskörper (12) mindestens abschnittsweise spanend nachbearbeitet wird.

16. Verfahren nach einem der Ansprüche 8 bis 15, **dadurch gekennzeichnet, dass** der Basiskörper (12) mindestens abschnittsweise spanlos nachbearbeitet wird.

## Claims

1. A shifting sleeve (10) for a manual gearbox, comprising a ring-shaped base body (12) and a toothing (16) which can be displaceably arranged on a corresponding toothing of a synchronizer body, the toothing being formed on the inner edge of the base body (12), **characterized in that** the ring-shaped base body (12) is disk-shaped.

2. The shifting sleeve according to claim 1, **characterized in that** the toothing is formed on at least one segment (14) which is bent off from the base body (12) outwards.

3. The shifting sleeve according to claim 2, **characterized in that** a plurality of segments (14) is provided which extend on either side of the base body (12).

4. The shifting sleeve according to claim 3, **characterized in that** six segments (14) are provided which are arranged alternately on either side of the base body (12).

5. The shifting sleeve according to any of the preceding claims, **characterized in that** further formations are provided which serve for the realization of a locking mechanism.

6. The shifting sleeve according to claim 5, **characterized in that** provided in the base body (12) is at least one recess (18) for a locking mechanism which prevents a shifting through of the shifting sleeve as long as the synchronization is not completed.

7. The shifting sleeve according to any of the preceding claims, **characterized in that** the base body (12) is made of sheet metal.

8. A method of manufacturing a shifting sleeve (10) for a manual gearbox, comprising the following steps:
- providing a base body (12) for the shifting sleeve (10) made of metal;
- forming a toothing (16) which concentrically surrounds an opening in the base body (12),
**characterized in that** the base body (12) is disk-shaped.

9. The method according to claim 8, **characterized in that** first a ring-shaped blank is provided, **in that** the toothing (16) is formed on the flat blank on at least one section, and **in that** this section is subsequently bent off from the plane of the blank so that a segment (14) on the base body (12) is obtained.

10. The method according to claim 8, **characterized in that** first a ring-shaped blank is provided, **in that** at least one segment (14) is bent off from the plane of the blank, and subsequently the toothing is stamped into the segment (14).

11. The method according to claim 8, **characterized in that** first a ring-shaped blank is provided, **in that** at least one flat segment blank is bent off from the plane of the blank, **in that** the toothing (16) is then stamped into the segment blank, and **in that** afterwards the segment blank is bent to its final shape to form a curved segment (14).

12. The method according to any of claims 8 to 11, **characterized in that** the toothing (16) is calibrated.

13. The method according to any of claims 8 to 12, **characterized in that** the base body (12) is punched out of a metal plate.

14. The method according to any of claims 8 to 13, **characterized in that** the base body (12) is subjected to a heat treatment at least in sections.

15. The method according to any of claims 8 to 14, **characterized in that** the base body (12) is finished by metal-cutting at least in sections.

16. The method according to any of claims 8 to 15, **characterized in that** the base body (12) is finished by a non-cutting process at least in sections.

## Revendications

1. Manchon coulissant (10) pour une boîte de vitesses, comportant un corps de base annulaire (12) et une denture (16) qui peut être agencée de manière déplaçable sur une denture correspondante d'un corps de synchronisation, la denture étant réalisée sur le bord intérieur du corps de base (12), **caractérisé en ce que** le corps de base annulaire (12) est en forme de disque.

2. Manchon coulissant selon la revendication 1, **caractérisé en ce que** la denture est réalisée sur au moins un segment (14) qui est replié vers l'extérieur depuis le corps de base (12).

3. Manchon coulissant selon la revendication 2, **caractérisé en ce qu'**il est prévu plusieurs segments (14) qui s'étendent des deux côtés du corps de base (12).

4. Manchon coulissant selon la revendication 3, **caractérisé en ce qu'**il est prévu six segments (14) qui sont agencés en alternance des deux côtés du corps de base (12).

5. Manchon coulissant selon l'une des revendications précédentes, **caractérisé en ce qu'**il est prévu d'autres conformations qui servent à la réalisation d'un mécanisme de blocage.

6. Manchon coulissant selon la revendication 5, **caractérisé en ce qu'**il est prévu dans le corps de base (12) au moins un évidement (18) pour un mécanisme de blocage empêchant la connexion du manchon coulissant tant que la synchronisation n'est pas terminée.

7. Manchon coulissant selon l'une des revendications précédentes, **caractérisé en ce que** le corps de base (12) est en tôle.

8. Procédé de fabrication d'un manchon coulissant (10) pour une boîte de vitesses, comprenant les étapes suivantes dans lesquelles :
- un corps de base (12) en métal est fourni pour le manchon coulissant (10) ;
- une denture (16) est réalisée, laquelle entoure un orifice dans le corps de base (12) de façon concentrique ;
**caractérisé en ce que** le corps de base (12) est en forme de disque.

9. Procédé selon la revendication 8, **caractérisé en ce qu'**une ébauche annulaire est tout d'abord fournie, **en ce que** la denture (16) est réalisée sur l'ébauche plane sur au moins un tronçon, et **en ce que** celui-ci est ensuite replié hors du plan de l'ébauche de manière à obtenir un segment (14) sur le corps de base (12).

10. Procédé selon la revendication 8, **caractérisé en ce qu'**une ébauche annulaire est tout d'abord fournie, **en ce qu'**au moins un segment (14) est replié hors du plan de l'ébauche, et **en ce que** la denture est ensuite estampée dans le segment (14).

11. Procédé selon la revendication 8, **caractérisé en ce qu'**une ébauche annulaire est tout d'abord fournie, **en ce qu'**au moins une ébauche de segment plane est repliée hors du plan de l'ébauche, **en ce que** la denture (16) est ensuite estampée dans l'ébauche de segment, et **en ce que** l'ébauche de segment est alors repliée dans un pliage final de manière à obtenir un segment arqué (14).

12. Procédé selon l'une des revendications 8 à 11, **caractérisé en ce que** la denture (16) est calibrée.

13. Procédé selon l'une des revendications 8 à 12, **caractérisé en ce que** le corps de base (12) est découpé à partir d'une plaque métallique.

14. Procédé selon l'une des revendications 8 à 13, **caractérisé en ce que** le corps de base (12) est soumis au moins partiellement à un traitement thermique.

15. Procédé selon l'une des revendications 8 à 14, **caractérisé en ce que** le corps de base (12) est réusiné au moins par tronçons par enlèvement de copaux.

16. Procédé selon l'une des revendications 8 à 15, **caractérisé en ce que** le corps de base (12) est réusiné au moins par tronçons sans enlèvement de copaux.
